Europäisches Patentamt

European Patent Office

Office européen des brevets

(19)

(11) Publication number: **0 060 942**
**B1**

# (12) EUROPEAN PATENT SPECIFICATION

(45) Date of publication of patent specification: **24.04.85**

(51) Int. Cl.⁴: **A 23 L 1/216, A 23 B 7/03**

(21) Application number: **81301109.5**

(22) Date of filing: **17.03.81**

(54) A process for producing frozen potato strips from strips of raw potatoes.

(43) Date of publication of application:
**29.09.82 Bulletin 82/39**

(45) Publication of the grant of the patent:
**24.04.85 Bulletin 85/17**

(84) Designated Contracting States:
**AT BE CH DE FR GB IT LI LU NL SE**

(56) References cited:
**EP-A-0 019 916**
**DE-A-2 100 175**
**DE-A-2 827 555**
**FR-A-2 409 017**
**GB-A-1 053 012**
**US-A-3 359 123**
**US-A-3 397 993**
**US-A-3 649 305**

(73) Proprietor: **CHEF-REDDY FOODS
CORPORATION
Post Office Box 607 Broadway & Lee Roads
Othello Washington 99344 (US)**

(72) Inventor: **Harney, David Lew
815 South Taylor Road Box 56
Othello Washington 99344 (US)**
Inventor: **Young, Harlow Sherwood Gourmet
Foods
Route 1, Box 120 Desert Spring Estate
Boardman Oregon 97818 (US)**

(74) Representative: **Allard, Susan Joyce et al
BOULT, WADE & TENNANT 27 Furnival street
London EC4A 1PQ (GB)**

Courier Press, Leamington Spa, England.

EP 0 060 942 B1

## Description

The present invention relates to a process for producing frozen potato strips from strips of raw potatoes.

For producing deep fat fried potatoes for quick-service, it is important that a stock of potato strips be available to meet varying demands. Customers prefer to have deep fat fried potato strips, known in the United States as French fried potatoes or simply "French fries", that have the texture, flavor and odor of fresh deep fat fried potatoes, but they do not want to wait to have such potatoes cooked. Consequently, it is desirable to be able to subject the potato strips to a very brief final heating or finish cooking while producing an attractive and palatable product.

The demand for deep fat fried potato strips is not particularly seasonal, yet the growing of the potatoes from which they are made is seasonal. Consequently, it is necessary to utilize a practical method of preserving deep fat fryable potato strips, for a considerable period of time, up to a year, and it is customary to accomplish such preservation of potato strips by freezing. A stock of frozen potato strips thus can be accumulated immediately following the potato growing season and the stock can be distributed as needed to meet the substantially constant demand for deep fat fryable potato strips throughout the following year.

Frozen potato strips have been used for making quick-service deep fat fried potatoes, but such potatoes have generally not been of the best quality, having one or more of the characteristics of sogginess, pale color, lack of crispness, poor flavour, a leathery shell and an interior that is undercooked or pasty instead of being mealy throughout.

In some instances, prior to being frozen, potato strips have been blanched, as in US—A—3,397,993 and US—A—3,649,305, or partially cooked in water, or partially deep fat fried, or partially dehydrated, or subjected to some combination of such process steps. Such deep fat fried potato strips often have not been of good quality.

US—A—3,359,123 proposed to use heated air for partially cooking whole unpeeled potatoes prior to being frozen, peeled and then cut into strips. The potatoes are dehydrated after being frozen rather than prior to being frozen.

The potato strips of US—A—2,565,942 are partially dried or cooked in water prior to being frozen.

US—A—3,244,538 proposes to subject potato strips to a preliminary drying step using dry heat or superheated steam prior to the potatoes being frozen, but any cooking effect which occurs extends only to the exterior of the potato, leaving the interior substantially uncooked or raw.

FR—A—2409017 discloses a process for the preparation of precooked potato products in which the potatoes are washed, peeled and treated whole or cut into pieces. The so-prepared potatoes are cooked at a temperature below the temperature at which sloughing of the potatoes surface would occur if the whole potato were cooked to its centre at that temperature. The potatoes are then heated in air and cooked again at a temperature of about 50 to 100°C. Following the last cooking procedure the potatoes can be frozen, chilled or retorted to preserve them.

The present invention provides a process for producing frozen potato strips from raw potato strips which process comprises circulating humid hot air having a temperature in the range of from 200°F to 250°F (93°C to 121°C) and a moisture content of at least 15% by weight over the surfaces of the raw potato strips in unblanched condition until the strips are partially gelatinized and partially dehydrated substantially throughout and their weight is reduced to 85% to 90% of their raw weight, circulating substantially dry hot air having a temperature in the range of from 190°F to 280°F (88°C to 138°C) and a humidity of less than 10% by weight over the surfaces of the strips until the strips are further partially dehydrated and their weight is 75% to 80% of their raw weight, and thereafter freezing the strips for storage.

The advantages offered by the invention are mainly that potato strips are prepared quickly and effectively from frozen storage while maintaining a high quality of such strips. Moreover, such frozen potato strips can be finally deep fat fried quickly for consumption. Further the process for preparing the frozen potato strips conserves energy by minimizing heat required to cook and/or dry such strips. Such strips when finish fried, even without being thawed first, have an appearance, texture, flavor and odor comparable to potato strips which have been deep fat fried without having been frozen.

One way of carrying out the invention is described below in detail.

Potatoes of a variety known to be suitable for deep fat frying are sorted, peeled and trimmed in accordance with conventional practice. Then the potatoes are cut into strips of a size customarily used for deep fat frying, such as of a width and thickness $\frac{1}{4}$ inch (6.35 mm) to $\frac{1}{2}$ inch (12.7 mm) and several inches (more than 10 cm) in length. After such strips are cut, they can be washed to remove surface starch.

The potato strips thus prepared can be treated by dipping or briefly soaking them in an antioxidant solution, or spraying them with such a solution, to inhibit discoloration by oxidation on exposure to air for a prolonged period. The solution may be a $\frac{1}{2}$% to 1% by weight aqueous solution of sodium pyrophosphate ($Na_2H_2P_2O_7$), sodium bisulfite ($NaHSO_3$), citric acid or other known discoloration inhibitor. The treating solution also may include reducing sugar, if desired, to facilitate browning of the potato strips when being finally deep fat fried ready for consumption. The treating solution may be heated to a temperature of 130°F to 180°F. (54°C to 82°C) and the potatoes may be subjected to the action of such a solution for a brief period within the range of 10 seconds to 25 seconds.

The potato strips then are subjected to heat at a temperature, for a time and under conditions which will partially cook and partially dehydrate the potato strips, such that the metabolic functions are deactivated, as evidenced by gelatinization of the starch. The affected potato material progresses toward a finely-granular condition in which the granules are easily separated. The potato strips are placed in an enclosure and hot air is circulated over their surfaces. The cooking dehydrating operations can be performed as a batch process or as a continuous process, and the potato strips can be stationary or moved on a belt through a heated chamber.

The processing apparatus can be designated as a heating enclosure. The heating of the potato strips can be effected entirely by high velocity currents of air heated by a heat exchanger, or heating effected by the air can be supplemented by auxiliary heat sources such as infrared or microwave heaters. The degree and penetration of cooking will depend on the condition and variety of potato, the cross-sectional size and shape of the strips, the type or types of heat source or sources, the temperature, humidity and velocity of the heating air and the length of time that the strips are subjected to heating.

An optional first stage of heating may be included in the process to remove surface moisture from the potato strips. The temperature of the initial air blown onto the strips may be within the range of 190°F to 280°F (88°C to 138°C), and preferably within the range of 250°F to 280°F (121°C to 138°C). The moisture content of the air should be less than 15% by weight so that the air currents will scavenge moisture readily from the surfaces of the potato strips in a period of 1 to 3 minutes. During such treatment, no appreciable moisture will be evaporated from the interiors of the potato strips.

During a second stage of heating, the potato strips are subjected to currents of hot humid air in the temperature range of 200°F to 250°F (93°C to 121°C), preferably within the range of 230°F to 250°F (110°C to 121°C), for a period of time sufficient to partially cook or gelatinize the strips and partially dehydrate them, in about three minutes to six minutes. The strips will be cooked to at least some degree close to the center but the outer portions of the strips will be cooked to a greater extent. Moisture evaporated from the potato strips tends to increase the humidity of the air as it is circulated. It is preferred that the moisture content of the air be within the range of 15% to 40% by weight. The recirculating air humidity is controlled so that the potato strips will be dehydrated to the desired extent while simultaneously being partially cooked. Such humid air can penetrate more effectively into the potato strips to cook them. The partially cooking modifies the cell structure of the potato so that the metabolic functions are deactivated and the starch is gelatinized, resulting in a finely granular condition in which the granules are soft but not mushy and are easily separated. Such a texture is designated as "mealy".

The air moisture content can be regulated by controlling the amount of dry air admitted to the heating chamber and the amount of moist air discharged from the chamber. During the cooking-evaporating treatment, the moisture content of the potato strips will be reduced so that the partially cooked and partially dehydrated strips will have a weight of 85% to 90% of their original weight.

During a third stage of heating the potato strips are subjected to heat which will dehydrate them to a weight of 75% to 80% of their original weight. Such heating may be effected by comparatively dry hot air, such as having a moisture content less than 10% by weight, which may or may not be supplemented by infrared or microwave heating. During such dehydration step, much of the heating air is exhausted or dried to maintain the low moisture content specified. Such dehydrating operation may be accomplished in two to four minutes. More moisture will be removed from the outer portions of the potato strips than from the inner portions. The surfaces of the potato strips will be dry to the touch, and the edges and corners of the potato strips may be almost totally dehydrated. Such dehydration procedure will result in a shell or crust on final deep fat frying which will be crisp but tender and not leathery.

The potato strips that are subjected to the cooking-dehydrating operation discussed above have not previously been blanched with steam, have not previously been soaked in water and have not previously been cooked in water. The antioxidant treatment by spraying or dipping is of sufficiently short duration so that the potato strips do not absorb any substantial amount of moisture during such initial treatment. Consequently, it is not necessary for the heated air to remove from the potato strips any substantial amount of artificial moisture which they have acquired, but, on the contrary, during the cooking-dehydrating operation, it is almost entirely the natural moisture of the potato strips that is evaporated. Consequently, the drying-cooking-dehydrating operation is performed more rapidly, and by supplying less heat energy, than would be required if the potato strips had picked up any substantial amount of artificial moisture prior to or during the cooking operation.

Following the drying-cooking-dehydrating operation described above, the partially cooked and partially dehydrated potato strips can be allowed to cool briefly and then can be par-fried quickly in cooking oil, such as for a period of $\frac{1}{3}$ of a minute to 2 minutes, depending on the temperature of the cooking oil and the size of the potato strips and the desired solids contents of the strips. Preferably the cooking oil is within the temperature range of 325°F to 390°F (163°C to 199°C). This preliminary deep fat frying operation removes additional moisture from the potato strips, the amount removed depending on the size of the strips, the temperature of the cooking oil and the duration of the preliminary frying step.

The potato strips then are frozen in a conventional manner and held in frozen condition until they are ready to be prepared for consumption by being subjected to the final deep fat frying operation. Such final frying operation can be accomplished without first thawing the potato strips and within a period of 1½ minutes to 3 minutes if the cooking oil is at a temperature within the range of 340°F to 380°F (171°C to 193°C). The resulting deep fat fried potato strips will have a crisp exterior without being leathery, will have a substantially homogeneous mealy interior and will be of golden brown color. Their flavor and odor will be as pleasant as those of potatoes which are deep fat fried without ever having been frozen.

### Claims

1. A process for producing frozen potato strips which process comprises circulating humid hot air having a temperature in the range of from 200°F to 250°F (93°C to 121°C) and a moisture content of at least 15% by weight over the surfaces of the raw potato strips in unblanched condition until the strips are partially gelatinized and partially dehydrated substantially throughout and their weight is reduced to 85% to 90% of their raw weight, circulating substantially dry hot air having a temperature in the range of from 190°F to 280°F (88°C to 138°C) and a humidity of less than 10% by weight over the surfaces of the strips until the strips are further partially dehydrated and their weight is 72% to 80% of their raw weight, and thereafter freezing the strips for storage.

2. A process as claimed in Claim 1 wherein the hot humid air has a temperature in the range of from 230°F to 250°F (110°C to 121°C), has a moisture content in the range of from 15% to 40% by weight, and is circulated over the strips for a period of from 3 to 6 minutes.

3. A process as claimed in Claim 1 or Claim 2 which includes the step of circulating substantially dry hot air having a temperature in the range of from 190°F to 280°F (88°C to 138°C) and a moisture content of less than 15% by weight over the surfaces of the potato strips before circulating hot humid air over their surfaces to remove moisture from the surfaces of the strips without removing appreciable moisture from the interior of the strips.

4. A process as claimed in Claim 3, in which the dry hot air circulated over the potato strips before the hot humid air is circulated over the strips for a period of from 1 to 3 minutes.

5. A process as claimed in any one of the preceding Claims which includes the step of circulating the humid hot air over the surfaces of the potato strips until the potato strips have a finely granular cell structure substantially throughout.

6. A process as claimed in any one of the preceding Claims wherein the potato strips are partially fried after the last dehydration step and prior to freezing.

7. A process as claimed in Claim 6 wherein the potato strips are fried in oil having a temperature in the range of from 325°F to 390°F (163°C to 199°C) for a period of from ⅓ to 2 minutes.

8. A process as claimed in any one of the preceding Claims wherein after the potato strips have been stored in frozen condition, they are then subjected to a final frying operation.

9. A process as claimed in Claim 8, wherein the final frying is in oil having a temperature in the range of from 340°F to 380°F (171°C to 193°C) for a period of from 1½ to 3 minutes.

### Patentansprüche

1. Verfahren zur Herstellung von gefrorenen Kartoffelstreifen, das umfaßt das Zirkulierenlassen von feuchter heißer Luft mit einer Temperatur innerhalb des Bereiches von 93 bis 121°C (200—250°F) und einem Feuchtigkeitsgehalt von mindestens 15 Gew.-% über den Oberflächen der rohen Kartoffelstreifen im unblanchierten Zustand, bis die Streifen praktisch durch und durch teilweise gelatiniert und teilweise entwässert sind und ihr Gewicht auf 85 bis 90 % ihres Rohgewichtes herabgesetzt ist, das Zirkulierenlassen von im wesentlichen trockener heißer Luft mit einer Temperatur innerhalb des Bereiches von 88 bis 138°C (190—280°F) und einem Feuchtigkeitsgehalt von weniger als 10 Gew.-% über den Oberflächen des Streifen, bis die Streifen weiter teilweise entwässert sind und ihr Gewicht 75 bis 80 % ihres Rohgewichtes beträgt, und das anschließende Einfrieren der Streifen für die Lagerung.

2. Verfahren nach Anspruch 1, bei dem die heiße feuchte Luft eine Temperatur innerhalb des Bereiches von 110 bis 121°C (230—250°F) und einen Feuchtigkeitsgehalt innerhalb des Bereiches von 15 bis 40 Gew.-% hat und über den Streifen über eine Zeitspanne von 3 bis 6 min zirkulieren gelassen wird.

3. Verfahren nach Anspruch 1 oder 2, das umfaßt das Zirkulierenlassen von im wesentlichen trockener heißer Luft mit einer Temperatur innerhalb des Bereiches von 88 bis 138°C (190—280°F) und einem Feuchtigkeitsgehalt von weniger als 15 Gew.-% über den Oberflächen der Kartoffelstreifen vor dem Zirkulierenlassen von heißer feuchter Luft über ihren Oberflächen, um Feuchtigkeit aus den Oberflächen der Streifen zu entfernen, ohne eine wesentliche Menge Feuchtigkeit aus dem Innern der Streifen zu entfernen.

4. Verfahren nach Anspruch 3, bei denen die trockene heiße Luft über den Kartoffelstreifen zirkulieren gelassen wird, bevor die heiße feuchte Luft über den Streifen zirkulieren gelassen wird über eine Zeitspanne von 1 bis 3 min.

5. Verfahren nach einem der vorhergehenden Ansprüche, das umfaßt das Zirkulierenlassen der feuchten heißen Luft über den Oberflächen der Kartoffelstreifen, bis die Kartoffelstreifen im wesentlichen durch und durch eine feinkörnige Zellstruktur haben.

6. Verfahren nach einem der vorhergehenden Ansprüche, bei dem die Kartoffelstreifen nach der letzten Entwässerungsstufe und vor dem Einfrieren teilweise fritiert werden.

7. Verfahren nach Anspruch 6, bei dem die Kartoffelstreifen in Öl mit einer Temperatur innerhalb des Bereiches von 163 bis 199°C (325—390°F) für eine Zeitspanne von $\frac{1}{3}$ bis 2 min fritiert werden.

8. Verfahren nach einem der vorhergehenden Ansprüche, bei dem die Kartoffelstreifen nach der Lagerung in tiefgefrorenem Zustand dann einer Schlußfritierung unterworfen werden.

9. Verfahren nach Anspruch 8, bei dem die Schlußfritierung in Öl mit einer Temperatur innerhalb des Bereiches von 171 bis 193°C (340—380°F) über eine Zeitspanne von 1,5 bis 3 min erfolgt.

**Revendications**

1. Procédé de préparation de morceaux de pomme de terre congelés caractérisé en ce qu'on fait circuler de l'air chaud humide présentant une température comprise entre 93 et 121°C et une teneur en humidité d'au moins 15 % en poids sur les surfaces des morceaux de pomme de terre crus à l'état non blanchi jusqu'à ce que les morceaux soient partiellement gélatinisés et partiellement déshydratés pratiquement partout et que leur poids soit ramené à 85—90 % de leur poids brut, on fait circuler de l'air chaud sensiblement sec présentant une température comprise entre 88 et 138°C et une humidité de moins de 10 % en poids sur les surfaces des morceaux jusqu'à ce que les morceaux aient subi une nouvelle déshydratation partielle et que leur poids soit de 75 à 80 % de leur poids brut, et l'on congèle ensuite les morceaux pour les conserver.

2. Procédé selon la revendication 1, caractérisé en ce que l'air chaud humide est à une température comprise entre 110 et 121°C, a une teneur en humidité comprise entre 15 et 40 % en poids et circule sur les morceaux pendant un temps de 3 à 6 minutes.

3. Procédé selon la revendication 1 ou 2, caractérisé en ce qu'il comporte l'opération de circulation d'air chaud sensiblement sec présentant une température comprise entre 88 et 138°C et une teneur en humidité de moins de 15 % en poids sur les surfaces des morceaux de pommes de terre avant la circulation d'air humide sur ces surfaces en vue d'éliminer de l'humidité des surfaces des morceaux sans éliminer appréciablement d'humidité de l'intérieur des morceaux.

4. Procédé selon la revendication 3, caractérisé en ce qu'on fait circuler de l'air chaud sec sur les morceaux de pomme de terre avant de faire circuler l'air chaud humide sur les morceaux pendant un temps de 1 à 3 minutes.

5. Procédé selon l'une quelconque des revendications précédentes caractérisé en ce qu'il comporte l'opération consistant à faire circuler l'air chaud humide sur les surfaces des morceaux de pomme de terre jusqu'à ce que les morceaux de pomme de terre présentent sensiblement partour une structure finement granulaire.

6. Procédé selon l'une quelconque des revendications précédentes, caractérisé en ce qu'on frit partiellement les morceaux de pomme de terre après la dernière opération de déshydratation et avant la congélation.

7. Procédé selon la revendication 6 caractérisé en ce qu'on frit les morceaux de pomme de terre dans de l'huile à une température de 163 à 199°C pendant un temps de $\frac{1}{3}$ de minute à 2 minutes.

8. Procédé selon l'une quelconque des revendications précédentes, caractérisé en ce qu'après avoir conservé les morceaux de pomme de terre à l'état congelé, on les soumet à une dernière opération de friture.

9. Procédé selon la revendication 8, caractérisé en ce que la dernière friture est opérée dans de l'huile à une température de 171 à 193°C pendant un temps de 1½ à 3 minutes.